Europäisches Patentamt

European Patent Office

Office européen des brevets

(11) Publication number: **0 367 833**

**A1**

(12) **EUROPEAN PATENT APPLICATION**
published in accordance with Art.
158(3) EPC

(21) Application number: **89903793.1**

(51) Int. Cl.5: **B41J 3/20**

(22) Date of filing: **28.03.89**

(86) International application number:
**PCT/JP89/00325**

(87) International publication number:
**WO 89/09134 (05.10.89 89/24)**

(30) Priority: **30.03.88 JP 74736/88**

(43) Date of publication of application:
**16.05.90 Bulletin 90/20**

(84) Designated Contracting States:
**DE FR GB IT NL**

(71) Applicant: **SONY CORPORATION**
**7-35 Kitashinagawa 6-Chome Shinagawa-ku**
**Tokyo 141(JP)**

(72) Inventor: **SAITO, Toshihide**
**Sony Corporation 7-35 Kitashinagawa**
**6-chome**
**Shinagawa-ku Tokyo 141(JP)**

(74) Representative: **Cotter, Ivan John et al**
**D. YOUNG & CO. 10 Staple Inn**
**London WC1V 7RD(GB)**

(54) **THERMAL HEAD DRIVE CIRCUIT AND MANUAL SCANNING-TYPE COPYING MACHINE.**

(57) A thermal head drive circuit in which printing data PD of n bits (n is an integer of 2 or greater) are successively fed to a data input terminal, heat-generating elements ($2_1$ to $2_n$) of a number of n in a thermal head (1) are heated in response to the values of bits of the printing data PD to effect the printing operation, and in which prior to heating the heat-generating elements ($2_1$ to $2_n$) by one printing data PDk, an inverted data PDK-1 obtained by inverting a printing data PDk-1 just before the printing data PDk is supplied to the heat-generating elements ($2_1$ to $2_n$) to pre-heat them. There is further provided a copying machine of the manually scanning type to which the thermal head drive circuit is adapted.

**FIG.1**

SPECIFICATION

Thermal Head Drive Circuit and Manual Scanning Type Copying Machine.

## Technical Field

This invention relates to a thermal head drive circuit and manual scanning type copying machine and more particularly to a thermal head drive circuit and manual scanning type copying machine with an improved printing quality.

## Background Art

The thermal head employed in the heat transfer printer or a heat sensitive printer has a number of heating elements, e.g. heating resistors, corresponding to the number of simultaneous printed dots, these heating elements being selectively heated and controlled as a function of the printing data. When assumed that the number of the simultaneously printed dots is $n$, where $n$ is an integer of not less than 2, and that these dots are arrayed in a row in a predetermined direction, the $n$ dots are printed simultaneously for each feed amount, while the head (or paper) is fed in a direction substantially orthogonal to the predetermined direction, the letters, symbols or figures are expressed by a two-dimensional dot matrix.

When performing simultaneous printing of $n$ dots for each printing data based on $n$ bits in accordance with the head (or paper) feed, if the temperature of each heating element of said n dots is fluctuated, irregularities are induced in the printing density or concentration, so that it becomes impossible to realize high quality printing.

Above all, in case of a shorter simultaneous printing time interval, fluctuations in the temperature distribution caused by previous printing will be left over to the next printing, resulting in the reduced and inaccurate temperature differential between the heated element and the non-heated element, with the result that the heated element becomes too high in temperature thus causing erroneous printing and density irregularities. That is, when the heating elemet which was heated at the time of previous printing is also heated at the time of next printing, resulting in much higher temperature, with the result that the printed character blotted. When the heating element which was not heated at the time of previous printing is heated at the time of next printing, resulting in insuffcient temperature, with the result that irregular printing and thinness of character occures. These especially occur when the relative velocity of a head and a printing paper is fast.

When a thermal transfer printer or a thermal sensitive printer using said thermal head is applied to a manual scanning copying device, or so-called handy copier apparatus, the thermal head is scanned on a printing paper by hand, with the result that feed rate varies easily and printing concentration tends to be changed because of said temperature fluctuations of each heating element.

The present invention has been made in view of the foregoing and is aimed to provide a thermal head drive circuit and manual scanning type copying machine in which temperature fluctuations of each heating element for each simultaneous printing are prevented to realize high quality free of erroroneous printing or density irregularities.

## Disclosure of the invention

For solving the above problem, the present invention provides a drive circuit for a thermal head sequentially fed with printing data of $\underline{n}$ bits, where $\underline{n}$ is an integer not less than 2, the printing being performed by heating and controlling $\underline{n}$ heating elements in a thermal head in association with the value of each bit in said printing data, characterized in that before heating and controlling said heating element by one of said printing data, the heating element is pre-heated and controlled by inversion data of the printing data immediately before said one printing data.

For solving the above problem a hand-scanning type copying machine characterized in that it comprises a read-out head for reading out data by manually scanning a main body, encoder means rotated in synchronism with rotation of a travelling roll provided in the main body, a driving circuit for a thermal head supplied sequentially with n-bit printing data, $n$ being an integer not less than 2, based on data read out at said read-out head, on the basis of an encoder output from said encoding means, said driving circuit controlledly heating a $n$ number of heating elements in said thermal head in association with the value of the bits of said printing data to effect printing, and switching means for switching between read-out by a read-out head and printing by said thermal head, said driving circuit being provided with control means for preliminarily controlledly heating said heating elements by data which is an inversion of the printing data just ahead said one printing data prior to controlled heating of said heating element.

According to the above characterized present invention, before heating control of the $n$ heating elements by the $n$ bit printing data for simultaneous printing of $n$ dots, each heating element is pre-heated and controlled by the inversion data of the immediately preceding $n$-bit printing data, so that the temperature fluctuations caused by selection and heating of the heating elements by the immediately preceding character printing data can be neutralized and uniformized by pre-heating by the above inversion data, so that high quality printing free of character printing error or concentration fluctuations at the ordinary character printing may be realized.

4

Brief Description of the Drawings

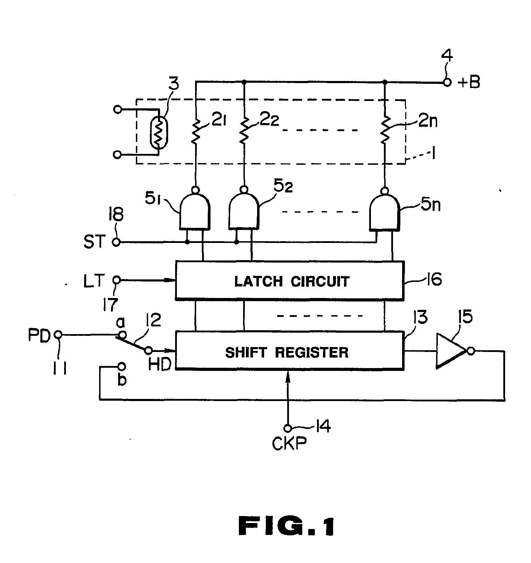

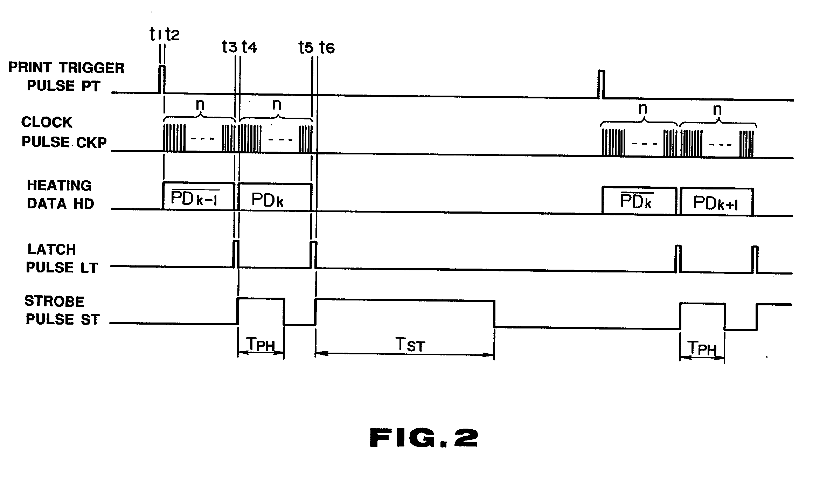

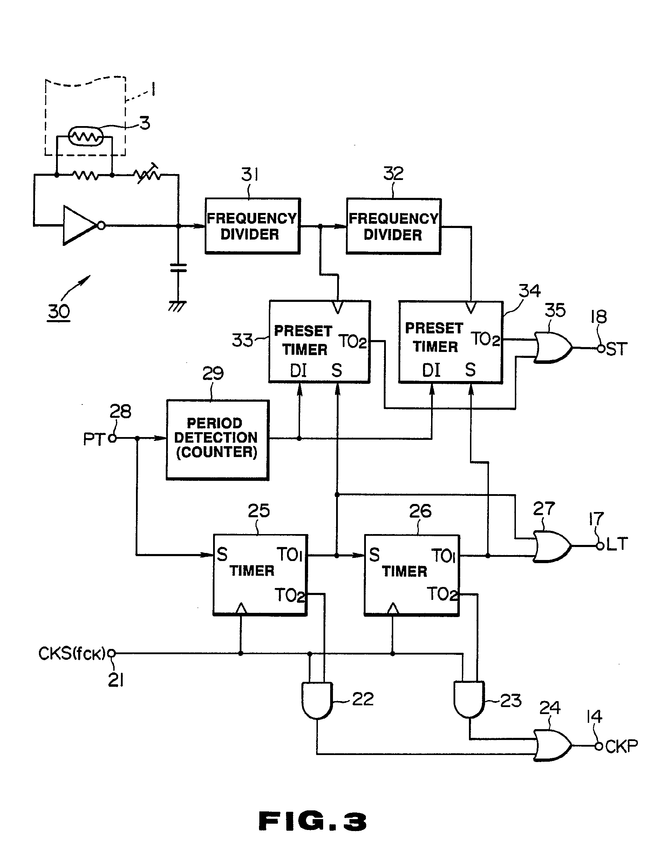

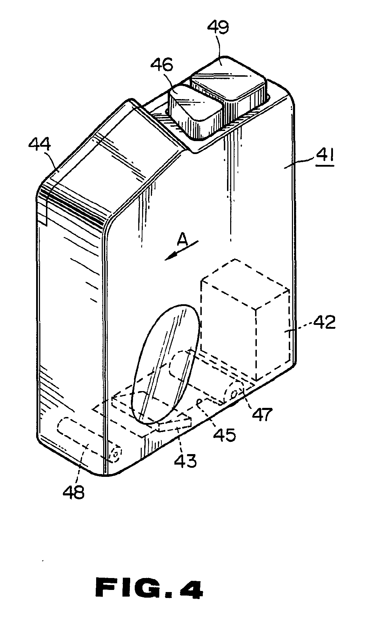

Fig. 1 is a diagrammatic block view showing a drive circuit for a thermal head according to an embodiment of the present invention; Fig. 2 is a timing chart for illustrating the operation, and Fig. 3 is a block circuit diagram showing a circuit construction for producing each timing pulse, and Fig. 4 is a perspective view showing a schematic construction of a manual supersmall size copying machine.

Best Mode for Execution of the Invention

Fig. 1 shows a schematic construction of an embodiment of a drive circuit for a thermal head pertaining to the present invention.

The thermal head 1 of Fig. 1 includes a $\underline{n}$ number of, for example, 64, heater resistors $2_1$, $2_2$, ... , $2_n$, corresponding to the number of dots to be printed simultaneously arranged in one direction. A thermistor 3 as the temperature sensor is provided near these resistors $2_1$, $2_2$, ... , $2_n$. The one ends of the $\underline{n}$ number of heater-resistors $2_1$, $2_2$, ... , $2_n$, are connected to a B+ power source terminal 4, while the other ends are connected to output terminals of NAND gates $5_1$, $5_2$, ... , $5_n$ (negation of logical product). Hence, the electrical power is selectively supplied only to the heating resistor connected to the NAND gate whose output becomes low ("L") to effect heating control. To the data input terminal 11, there are sequentially supplied n-bit serial printing

5

data PD corresponding to the number $n$ of dots printed simultaneously, and supplied to a n-bit shift register 13 by way of a select terminal $a$ of a changeover switch 12. The shift register 13 effects a shift operation sequentially in response to clock pulses CKP from a terminal 14 such that the serial output is transmitted via inverter (inverting or negating circuit) 15 to a select terminal $b$ of the changeover switch 12, while the n-bit parallel output is transferred to a latch circuit 16. The latch circuit 16 operates in response to latch pulses LT supplied to the terminal 17 to latch the n-bit parallel output from the shift register 13 to transmit each bit of the latched n-bit parallel data to one input terminals of the NAND gates $5_1$, $5_2$, ... , $5_n$. To the other input terminals of these NAND gates $5_1$, $5_2$, ... , $5_n$, there are supplied strobe pulses ST via terminal 18 to effect control of the heating time. The data supplied from the changeover switch 12 to the shift register 13 are the data for selectively heating and controlling the heating resistors $2_1$, $2_2$, ... , $2_n$ of the thermal head 1, these data being hereafter called the heating data HD.

The operation of the circuit having the construction will be explained by referring to Fig. 2.

The printing trigger pulse PT of Fig. 2 is the pulse used to start the printing operation of the simultaneous printing of $n$ dots by the heating reistors $2_1$, $2_2$, ... , $2_n$.

The pulse is outputted sequentially at a prescribed feed interval (print dot interval) in conjunction with the paper or head feed movement in a direction substantially orthogonal to the array direction of the heating resistors $2_1$, $2_2$, $\cdots$, $2_n$. Responsive to inputting of the print trigger pulse PT, $\underline{n}$ number of clock pulses CKP are generated twice in association with $\underline{n}$ dots printed simultaneously. During the time the first $\underline{n}$ pulses are produced, during the period of producing these $\underline{n}$ pulses twice, the changeover switch 12 is switched to the select terminal $\underline{b}$ to fetch the preceding inverted data of the printing data in readiness for the preliminary heating as later described. During the next $\underline{n}$ pulses, the changeover switch 12 is switched to the select terminal $\underline{a}$ to effect the inputting of the printing data PD (n-bit serial data) to be printed simultaneously.

Fig. 2 shows the case in which the k'th and (k+1)'th dot rows, in the head or paper feed direction each consisting of $\underline{n}$ dots, are to be printed sequentially. Considering the case in which the k'th dot row is to be printed, during the term of the first $\underline{n}$ pulses during the period of generation of the second series of $\underline{n}$ pulses after inputting of the print trigger pulse PT (or time $t_2 - t_3$), the immediately preceding printing data stored in the shift register 13, that is, the n-bit printing data $PD_{k-1}$ employed for printing the (k-1)th dot row, are outputted bit by bit in dependence upon the $\underline{n}$

7

pulses, and are inverted in an inverter 15 so as to be supplied to the shift register 13 via terminal $\underline{b}$ of the changeover switch 12, so that the heating data HD inputted to the shift register 13 is the aforementioned immediately preceding inversion data $PD_{K-1}$. When this inversion data $PD_{K-1}$ is completely taken into the shift register 13 and outputted as the n-bit parallel data, latch pulse LT is introduced into a terminal 17 of the latch circuit 16 to latch the n-bit parallel data corresponding to the data $PD_{k-1}$ so that the respective bits are supplied to one input terminals of the NAND gates $5_1$, $5_2$, ... , $5_n$. Then, by the strobe pulse ST of the predetermined pulse width $T_{PH}$ since time $t_4$, the heating resistors $2_1$, $2_2$, ... , $2_n$ of the thermal head 1 are heated selectively, in accordance with the values of the respective bits of the above parallel data. The pulse width $T_{PH}$ of the strobe pulse ST at this time is intended for obtaining the so-called pre-heating time and it is not intended to make a prolonged heating to effect heat transfer or sensitive printing.

Then, during the period of generation of the $\underline{n}$ pulses during time periods $t_4$ and $t_5$, changeover switch 12 is connected to the select terminal $\underline{a}$ and, in accordance with the $\underline{n}$ pulses, n-bit serial print data $PD_k$ is introduced to terminal 11 and transmitted as the aforementioned heating data HD to the shift register 13. This print data $PD_K$ is completely introduced into the shift register 13 to be outputted as the n-bit parallel data which is latched by a latch pulse LT in a latch circuit 16. Each bit of the n-bit parallel data corresponding to $PD_k$ is transmitted to one input terminal of each NAND gates $5_1$, $5_2$, ... , $5_n$. By the strobe pulse ST of the predetermined pulse width $T_{ST}$ since time $t_6$, the heating resistors $2_1$, $2_2$, ... , $2_n$ of the thermal head 1 are selectively heated in accordance with the value of each bit of the parallel data to effect the printing for the k'th row. It is to be noted that the pulse width $T_{ST}$ at this time is set to the time for effecting the main heating for heat transfer or recording.

For printing the (k+1)th dot row, before proceeding to printing based on the printing data $PD_{K+1}$, pre-heating is performed during a predetermined time $T_{PH}$ by the inversion data $\overline{PD_K}$ of the printing data $PD_k$ for the k'th row. Then, the main heating for another predetermined time $T_{ST}$ is performed by the printing data $PD_{k+1}$.

In this manner, pre-heating is performed on the basis of the inversion data of the immediately print data, in such a manner that the fluctuations in the temperature distribution caused by the selective heating control of the heating resistors $2_1$, $2_2$, ... , $2_n$ at the time of the immediately preceding printing are neutralized to uniformize the temperature to provide for high quality printing free of printing errors or sporadic concentration, at the time of the ensuing printing.

Referring to Fig. 3, concrete examples of the circuit construction for obtaining the various timing pulses such as clock pulses CKP, latch pulses LT or strobe pulses ST.

To the input terminal 21 of Fig. 3, there is supplied a clock signal CKS having a predetermined frequency $f_{ck}$. This clock signal CKS is controlled by AND (logical product) gates 22 and 23 and a logical sum is taken at OR gate 24 to produce the clock pulse CKP. The respective gate signals of the AND gates 22 and 23 are obtained at the output terminal $TO_2$ of the timers 25 and 26 as later described. These timers 25, 26 are pulse count type timers which counts $\underline{n}$ clock signals CKS since the time the trigger pulse is entered at the start terminal S, such that a pulse is outputted at a first terminal $TO_1$ during count-up or at the time of ending of $\underline{n}$ counts and a signal going "H" during counting (high level) is outputted at the second output terminal $TO_2$. The print trigger pulse PT is entered to the start terminal S of the timer 25 via a terminal 28 and the pulse count operation is started at the same time that the trigger pulse PT rises (at the time $t_2$ in Fig. 2). To the start terminal of the timer 26 is entered the count end pulse from the output terminal $TO_1$ of the timer 25. Thus, a signal which becomes "H" during the time since time $t_2$ of Fig. 2 until time $t_3$ at which $\underline{n}$

10

clock pulses have been counted is outputted from the output terminal $TO_2$ of timer 25 and is fed to the AND gate 22, so that $n$ pulses of the clock signal CKS are passed through the AND gate 22 during the time $t_2 - t_3$ and fed to the terminal 14 via OR gate 24. Next, at the output terminal $TO_2$ of timer 26, a signal which goes "H" is outputted since time $t_4$ when the count end pulse falls until time $t_5$ when $n$ pulses of the clock signals CKS have been counted, so that, during the time $t_4 - t_5$, $n$ pulses of the clock signals CKS will pass through AND gate 23 and transmitted to terminal 14 via OR gate 24. The count end pulse from the output terminals $TO_1$ of the timers 25 and 26 are coupled to terminal 17 via OR gate 27 as the latch pulse LT.

Next, the print trigger pulse PT from terminal 28 is supplied to a period senser circuit 29 composed of counters etc. The period senser circuit 29 counts and finds the number of clock pulses having a predetermined frequency during the one period of the pulse PT as the period data of the print trigger pulse. The detected period data is supplied to each preset data input terminal D1 of preset timers 33 and 34. These preset timers 33 and 34 start counting the clocks since the time the trigger pulse (the count end pulse from the each output terminal $TO_1$ of· the timers 25, 26 in this embodiment.) is entered to a start terminal S and a signal which becomes "H" (high level) from

11

the output terminal $TO_2$ in the course of the count operation until reaching the preset value supplied and loaded to the terminal DI (above period data). The output pulses from the output terminals $TO_2$ of these preset timers 33 and 34 are supplied to the OR gate 35 and supplied to the terminal 18 as the strobe pulse ST. Hence, the shorter the period of the print trigger pulse PT, that is, the faster the head or paper feed rate, the shorter is the width of each strobe pulse ST , e. g. the pre-heating time $T_{PH}$ and main heating time $T_{ST}$.

The clocks supplied to the preset timers 33 and 34 are obtained upon frequency dividing the output from the oscillator 30 by frequency dividers 31 and 32, with the oscillation frequency of the oscillator 30 being changed as a function of the temperature of the thermal head 1. The frequency divider 32 is provided for deciding the rate between the pre-heating time $T_{PH}$ and the main heating time $T_{ST}$. When the frequency dividing rate is 1/4, the main heating time $T_{ST}$ is four times the pre-heating time $T_{PH}$. To a portion of a time constant circuit deciding the oscillation frequency of the oscillator 30 is connected a thermistor 3 as a temperature sensor provided in the thermal head L, with the oscillation frequency being changed with the change in the resistance of the thermistor 3 caused by the temperature of the thermal head 1. At this time, the higher the temperature, the lower is the resistance and the higher is

12

the oscillation frequency, so that each output pulse width (the above pre-heating time $T_{PH}$ and the main heating time $T_{st}$) from the timers 33 and 34 becomes shorter.

In the above construction of Fig. 3, by controlling the heating time $T_{ST}$ (and pre-heating time) as a function of the temperature of the thermal head 1, the temperature of the heating resistors $2_1$, $2_2$, ... , $2_n$ at the time of printing, it becomes possible to elevate the printing quality. Also the heating time $T_{ST}$ (and $T_{PH}$) are controlled as a function of the head feed rate (or paper feed rate). When the printing interval becomes shorter with the head feed rate becoming faster, the heating interval of the heating resistors $2_1$, $2_2$, ... , $2_n$ of the thermal head 1 becomes shorter so that there arises the risk of over-heating. Therefore, the heating interval is shortened to prevent the excess heating.

A tremendous effect may be achieved with a manually operated ultra-small size duplicating machine which is constructed as shown for example in Fig. 4. Thus type of the manually operated ultra-small size duplicating machine is shown for example in the specification and the drawings of the US Patents 4611246 and 4716291. The diagrammatic construction of this duplicating machine is briefly explained by referring to Fig. 4.

The manually operated ultra-small size duplicating

13

machine, hereinafter referred to as a handy copier apparatus, is so constructed that, when a main body 41 is moved manually along the direction shown by an arrow $\underline{A}$, data recorded on a manuscript or the like may be read out or the read-out data may be printed on a printing substrate, such as paper. A read-out head 42 is adapted to optically read data recorded on a paper surface such as a manuscript or a similar object, and is made up of a light source for irradiating a data surface to be read out with light, a detection device, such as CCD, receiving the light from the data surface, and optical devices transmitting the reflected light to a light receiving element. A printing head 43 is immersibly mounted on the main body 41 and constructed by a thermal head as will be subsequently described. The main body 41 is provided with a housing section for accommodating an ink ribbon cartridge and a housing section for accommodating a battery acting as a power source, these housing sections being opened or closed by a lid 44. The lower surface of the main body 41 is formed with an opening 45 through which the printing head 43 is protruded only during printing. A changeover switch 46 used for switching between data read-out and printing and constitutes a mode suitching means in cooperation with a start switch 49 as will be subsequntly described. By pressing the changeover switch 46 in a predetermined manner, the printing head 43 is protruded via the opening 45. A

14

.transfer contact roller 47 and a travelling roller 48 are rotatably supported so as to be protruded from the lower surface of the main body 41 and are adapted to be rotated along, for example, the upper surface, when the main body 41 is moved for scanning. The transfer contact roller 47 is connected to a rotary encoder, not shown, for sensing the moving speed of the main body 41. The output pulse of the encoder is used for generating clock pulses for the data-reading CCD. The start switch 49 constitutes, together with the above mentioned changeover switch 46, a mode switching means, and data read-out and printing are performed with the start switch 49 in the depressed state. In the present embodiment, by pressing the start switch 49, the printing mode is switched over to the read-out mode by the read-out head, and the main body is scanned in a predetermined direction, with the start switch 49 being depressed such as with a finger. With the switch 49 pressed down, read-out trigger pulses and printing pulses as start pulses are generated by a microprocessor or the like, which is provided in the main body, so that the operation under the selected mode is started. However, in order to realize each of these states, it is necessary for the travelling roll to be in the rotating state to prevent an accident to an operator from being caused by the thermal head.

A thermal head is utilized for a printing head of the

15

handy copier apparatus. It is because the device itself is small in size, so that, with an impact type printer head used in an ordinary stationary type printer head, the head itself is larger in size and presents noise problems. However, with the use of the thermal head, since the main body is manually moved in a predetermined direction to effect data read-out or printing, the head feed speed may be fluctuated. Considering that changes in printing density may be caused in this manner, application of the above described embodiment of the present invention to such handy copier apparatus significantly contributes to improvement in the printing quality. The printing trigger pulse is the pulse related to the amount of travel when the hand copier is scanned manually on the printing surface of a paper sheet, for example. For the printing trigger pulse in such case, a so-called encoder pulse obtained by detecting the rotation of the transfer contact roll 47 provided on the lower surface, or the surface facing to or contacting with the paper, by means of a rotary encoder, or a pulse obtained upper frequency dividing or multiplication, is employed.

In the drive circuit for the thermal head according to the present invention, before heating control of the $n$ heating elements by the $n$ bit printing data for simultaneous printing of $n$ dots, each heating element is pre-heated and controlled by the inversion data of the immediately preceding

16

n-bit printing data, so that the temperature fluctuations caused by selection and heating of the heating elements by the immediately preceding character printing data can be neutralized and uniformized by pre-heating by the above inversion data, so that high quality printing free of character printing error or concentration fluctuations at the ordinary character printing may be realized.

In the embodiment of the present invention, the heating time is controlled as a function of the temperature of the thermal head, while the heating time is controlled in accordance with the head or paper feed rate, such that the temperature of each heating element (heating resistor) at the time of character printing, that is, heating temperature and non-heating temperature, may be maintained at preset moderate temperatures, thereby to improve the printing quality. More specifically, the heating time is shartened when the temperature of the thermal head itself is high while the heating time is shortened when an excessively heated state may be brought about due to the higher head feed rate (or the shorter interval of the simultaneous character printing).

Above all, when the drive circuit of the present invention is applied to a manual supersmall size printer or so-called handy copier apparatus, it becomes possible to cope with variable head feed rate by manual scanning to achieve optimum control through heating and control of each heating

17

element at an optimum temperature.

It is noted that the present invention is not limited to the above embodiment. For example, the inversion data of the immediately preceding printing data for pre-heating may be formed at a stage preceding the shift register and the pre-heating inversion data and the printing data may be transmitted for each character printing in this order to the shift register. The circuit construction for producing each timing pulse is not limited to the examples shown. For example, after latching the pre-heating inversion data or the character printing data strobe pulses may be produced each with a predetermined delay time. The present invention may be applied not only to the hand copying device but also to an ordinary heat transfer printer or heat sensitive printer. Various other changes may be made without departing from the purport of the invention.

18

Claims

1)   A driving circuit for a thermal head in which printing data of an n number of bits, n being an integer not less than 2, are sequentially supplied and in which an n number of heating elements in a thermal head is controlledly heated in association with the values of the respective bits of the printing data,

characterized by control means for preliminarily controlling the heating of said heating element before controlleed heating of said heating element by one of said printing data, by  inverted dat inverted from the printing data immediately preceding said one of said printing data.

2)   A driving circuit for a thermal head according to claim 1 characterized in that said inverted data are of shorter duration than the printing data supplied .to said thermal head.

3)   A driving circuit for a thermal head according to claim 2 characterized in that said control means comprises inverting means for inverting said printing data.

4)   A driving circuit for a thermal head according to claim 3 wherein said inverting means is formed by an inverted circuit.

5)   A driving circuit for a thermal head according to claim 3 characterized in that said control means comprises switching means for selectively supplying to said thermal

19

head printing data or inverted data inverted by said printing data inverting means.

6) A driving circuit for a thermal head according to claim 1 characterized in that it comprises timing setting means for setting a timing for switching between printing data supplied to said th ermal head and inverted data from said inverting means.

7) A driving circuit for a th ermal head according to claim 6 characterized in that said timing setting means include first timing signal forming means for producing an $n$ number of clock pulses for the n-bit printing data by printing trigger pulses and clock signals, while forming a first control signal, and second timing signal forming means for forming a second control signal controlling the period of supplying printing data and inverted data to said thermal head on the basis of a detection output produced upon detecting the period of said printing trigger pulse and an output signal from said first timing signal forming means.

8) A driving circuit for a thermal head according to claim 7 characterized in that said second timing signal forming means is adapted for forming said second control signal on the basis of a detection output from temperature detection means adapted for detecting the temperature of said thermal head, said second control signal being such a signal whereby the period of supply said inverted data and the period of

20

.supplying said printing data supplied to said thermal head become progressively shorter.

9) A driving circuit for a thermal head according to claim 8 characterized in that said control means comprises data converting means supplied with said clock pulses and adapted for converting printing data into a parallel signal, latching means for latching the parallel output from said data converting means by said first control signal, and gating means supplied with the output of said latching means and supplying the output from said latching means to said thermal head only during the time when the second control signal is supplied thereto.

10) A driving circuit for a thermal head according to claim 8 characterized in that said switching means is supplied with the inverted data during the time when the first $n$ number of clock pulses are generated by said timing signal forming means and with the printing data during the time when the next $n$ number of pulses are generated.

11) A driving circuit for a thermal head according to claim 1 characterized in that control by said control means is so made that the periods of supplying the printing data and the periods of supplying the inverted data are changed on the basis of the temperature of said thermal head.

12) A circuit for a thermal head according to claim 1 characterized in that control by said control means is so made that the pulse width of the printing data and the inverted data becomes shorter with rise in the temperature of said thermal head.

13) A hand-scanning type copying machine characterized in that it comprises a read-out head for reading out data by manually scanning a main body, encoder means rotated in synchronism with rotation of a roller provided in the main body, a driving circuit for a thermal head supplied sequentially with n-bit printing data, n being an integer not less than 2, based on data read out at said read-out head, on the basis of an encoder output from said encoding means, said driving circuit controlledly heating a $\underline{n}$ number of heating elements in said thermal head in association with the value of the bits of said printing data to effect printing, and switching means for switching between read-out by a read-out head and printing by said thermal head, said driving circuit being provided with control means for preliminarily controlledly heating said heating elements by data which is an inversion of the printing data just ahead said one printing data prior to controlled heating of said heating element.

14) A hand-scanning type copying machine according to claim 13 characterized in that the inverted data are of shorter duration than the printing data supplied to said thermal head.

22

.15) A hand-scanning type copying machine according to claim 14 characterized in that said control means is provided with means for inverting said printing data.

16) A hand-scanning type copying machine according to claim 15 characterized in that said inverting means is formed by an inverter circuit.

17) A hand-scanning type copying machine according to claim 15 characterized in that said control means is provided with switching means for selectively supplying to said thermal head inverted data inverted from said printing data by said inverting means and said printing data.

18) A hand-scanning type copying machine according to claim 13 characterized in that the driving circuit for said thermal head is provided with timing setting means for setting a timing of switching between printing data supplied to said thermal head and inverted data from said inverting means.

19) A hand-scanning type copying machine according to claim 18 wherein said timing setting means include first timing signal forming means for producing an $n$ number of clock pulses for the n-bit printing data by printing trigger pulses and clock signals formed on the basis of said printing trigger pulses and an encode output of said encoder means, while forming a first control signal, and second timing signal forming means for forming a second control signal controlling the period of supplying printing data and

23

inverted data to said thermal head on the basis of a detection output produced upon detecting the period of said printing trigger pulse and an output signal from said first timing signal forming means.

20) A head-scanning type copying machine according to claim 19 characterized in that said second timing signal forming means is adapted for forming said second control signal on the basis of a detection output from temperature detection means adapted for detecting the temperature of said thermal head, said second control signal being such a signal whereby the period of supplying said inverted data and the period of supplying said printing data supplied to said thermal head become progressively shorter.

21) A hand-scanning type copying machine according to claim 20 characterized in that said control means comprises data converting means supplied with said clock pulses and adapted for converting printing data into a parallel signal, latching means for latching the parallel output from said data converting means by said first control signal, and gating means supplied with the output of said latching means and supplying the output from said latching means to said thermal head only during the time when the second control signal is supplied thereto.

22) A hand-scanning type copying machine according to claim 21 characterized in that said switching means is supplied

24

.with the inverted data during the time when the first n number of clock pulses are generated by said timing signal forming means and with the printing data during the time when the next n number of pulses are generated.

23) A hand-scanning type copying machine according to claim 13 characterized in that control by said control means is so made that the period of supplying the printing data and the period of supplying the inverted data are changed on the basis of the temperature of said thermal head.

24) A hand-scanning type copying machine according to claim 13 characterized in that control by said control means is so made that the pulse width of the printing data and the inverted data becomes shorter with rise in the temperature of said thermal head.

**FIG.1**

**FIG.2**

EP 0 367 833 A1

**FIG.3**

FIG.4

# INTERNATIONAL SEARCH REPORT

International Application No  PCT/JP89/00325

## I. CLASSIFICATION OF SUBJECT MATTER (if several classification symbols apply, indicate all) 6

According to International Patent Classification (IPC) or to both National Classification and IPC

Int.Cl$^4$  B41J3/20, 116

## II. FIELDS SEARCHED

| Minimum Documentation Searched 7 | |
|---|---|
| Classification System | Classification Symbols |
| IPC | B41J3/20, 116 |

Documentation Searched other than Minimum Documentation
to the Extent that such Documents are Included in the Fields Searched 8

| | |
|---|---|
| Jitsuyo Shinan Koho | 1960 - 1988 |
| Kokai Jitsuyo Shinan Koho | 1971 - 1988 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| Y | JP, A, 58-155975 (Ricoh Co., Ltd.)<br>16 September 1983 (16. 09. 83)<br>All sentences<br>(Family: none) | 1 - 12,<br>14 - 24 |
| Y | JP, A, 60-208163 (Toshiba Corp.)<br>19 October 1985 (19. 10. 85)<br>All sentences<br>(Family: none) | 13 |
| Y | JP, A, 57-117977 (Fuji Xerox Co., Ltd.)<br>22 July 1982 (22. 07. 82)<br>All sentences<br>(Family: none) | 11-12, 20,<br>23-24 |

* Special categories of cited documents: 10

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

## IV. CERTIFICATION

| Date of the Actual Completion of the International Search | Date of Mailing of this International Search Report |
|---|---|
| June 12, 1989 (12. 06. 89) | July 3, 1989 (03. 07. 89) |
| International Searching Authority | Signature of Authorized Officer |
| Japanese Patent Office | |

Form PCT/ISA/210 (second sheet) (January 1985)